# EUROPÄISCHE PATENTSCHRIFT

(11) **EP 3 476 223 B1**
(45) Veröffentlichungstag und Bekanntmachung des Hinweises auf die Patenterteilung: **03.06.2020**
(21) Anmeldenummer: 17198050.1
(22) Anmeldetag: 24.10.2017
(51) Int. Cl.: A23C 19/028, A23C 19/032, A23C 19/05, A23C 19/076, B01D 61/02, B01D 61/14, B01D 61/42, B01D 61/58, A23C 7/04, A23C 9/142, A23C 9/144

(54) **QUARKGRUNDMASSE MIT VERBESSERTEN GESCHMACKSEIGENSCHAFTEN (I)**
QUARK MASS WITH IMPROVED FLAVOUR PROPERTIES (I)
SUBSTANCE DE BASE DE FROMAGE FRAIS PRÉSENTANT DES QUALITÉS GUSTATIVES AMÉLIORÉES (I)

(43) Veröffentlichungstag der Anmeldung: 01.05.2019
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- EP-A1- 1 031 288
- EP-A1- 2 796 051
- EP-A1- 2 839 747
- EP-A1- 2 839 748
- EP-A1- 2 839 749
- EP-A2- 0 056 658
- WO-A1-01/93689
- DE-A1- 2 822 000
- DE-T2- 69 216 777
- DE-T2- 69 409 510
- US-A- 5 013 573
- US-A1- 2007 166 447
- SCHKODA P: "Das neue FML-Frischkäseverfahren", DEUTSCHE MILCHWIRTSCHAFT, HILDESHEIM, DE, Bd. 48, Nr. 2, 1. Januar 1997 (1997-01-01) , Seiten 36-41, XP002101132, ISSN: 0012-0480

## Beschreibung

### GEBIET DER ERFINDUNG

Die Erfindung befindet sich auf dem Gebiet Milchprodukte und betrifft eine geschmacksverbesserte und im Natriumgehalt reduzierte Quarkgrundmasse, ein Verfahren zu ihrer Herstellung und ihre Verwendung in Nahrungsmittelprodukten.

### STAND DER TECHNIK

Zur Herstellung von Quark oder Frischkäse - die beiden Begriffe werden im Folgenden synonym verwendet - wird in der Regel entrahmte Milch einer Temperaturbehandlung unterworfen und die enthaltenen Proteine denaturiert.

Durch die anschließende Zugabe von Milchsäurebakterien und Lab erfolgt die so genannte Dicklegung (Phasenumkehrung) der Milch. Das Casein gerinnt und bildet die fachlich bezeichnete Gallerte aus. Nach der Reifung (8 bis 20 h) wird die Gallerte aufgerührt. Hierdurch die Molkenabtrennung ausgelöst und im Separator werden dann die beiden Phasen getrennt. Die flüssige Sauermolke wird anderweitig verarbeitet und die Quarkgrundmasse durch Zugabe von Sahne auf den gewünschten Fett- und Proteingehalt eingestellt.

Dominiert werden die technischen Herstellverfahren durch entsprechende Separierverfahren. Durch Variation der Separierbedingungen und technische Modifikationen der Separatoren ist derzeit eine Vielfalt von Verfahrensausgestaltungen möglich. Der Magermilcheinsatz liegt bei einem Eiweißgehalt der Magermilch von 3,3 bis 3,5 Gew.-% im Bereich von 4,10 bis 4,15 kg Magermilch je Kilogramm zu produzierendem Magerquark oder Frischkäse (4,10 bis 4,15 kg Magermilch/kg Magerquark), wenn letztere 18 % Trockenmasse aufweisen. Somit fallen 3,10 bis 3,15 kg Sauermolke je Kilogramm Magerquark an (3,10 bis 3,15 kg Sauermolke/kg Magerquark). Der Eiweißgehalt erreicht dabei Größenordnungen von 12,6 bis 12,8 Gew.-%.

Neben den durch Separation gekennzeichneten Herstellverfahren sind auch Verfahren bekannt, in denen die Aufkonzentrierung der fermentierten Prozessmilch mittels Ultrafiltration erfolgt. So ist z.B. aus der US 2003/0129275 A1 (LACT INNOVATION) bekannt, dass bei der Käse- und Quarkherstellung auch die Mikrofiltration und Ultrafiltrationsschritte eingesetzt werden können. Die Anwendung der Mikrofiltration auf Magermilch zur Herstellung von Käse und Molkeproteinprodukten wird beispielsweise in der US 2003/0077357 A1 (CORNELL RES FOUNDATION) beschrieben.

Aus der EP 1752046 A1 (TUCHENHAGEN) ist ein Verfahren zur Herstellung von fermentierten Milchprodukten bekannt, bei dem man Prozessmilch fermentiert, das Fermentationsprodukt einer Mikrofiltration unterwirft und nur das gesäuerte Retentat weiterverarbeitet.

In ihrem Aufsatz mit dem Titel *"*The pre-concentration of milk by nanofiltration in the production of Quark-type fresh cheeses" beschreiben MUCCHATTO ET AL den Einfluss der Anwendung einer zuvor nanofiltrierten Milch auf die Eigenschaften eines Quarks, welcher aus dieser nanofiltrierten Milch hergestellt wird. Vorversuche des Nanofiltrationsverfahrens wurden mit wässrigen Lösungen von NaCl, CaCl₂, MgSO₄, Na₂SO₄ Laktose und Vollmilch durchgeführt. Der Herstellungsweg entspricht dem Standard Herstellverfahren von Quark, wobei lediglich statt Magermilch im Sinne der vorliegenden Anmeldung ein aus der Nanofiltration von Vollmilch resultierendes Retentat verwendet wird. [vgl. LAIT VOL. 80 (1), S. 43-50 (2000**)]**

In DEUTSCHE MILCHWIRTSCHAFT VOL 48(2), S. 36-41 (1997**)** wird ein Verfahren zur Frischkäseherstellung offenbart, bei dem die Magermilch durch Nanofiltrieren konzentriert wird. Anschließend wird die Milch bei 80 °C für sieben Minuten erhitzt, anschließend bei 30 °C in eine ausgewählte Kulturenkombination eingerührt und dann für 14 bis 16 Stunden fermentiert. Nach der Fermentation wird die gewünschte Trockenmasse des Endproduktes durch Ultrafiltrieren oder Separieren eingestellt.

Die EP 1364582 A1 betrifft ein gesäuertes Milchprodukt, dessen wesentlicher Bestandteil Milch und/oder Magermilch und/oder Molke darstellt. Konkret beansprucht werden gesäuerte Michprodukte, welche durch Entzug von einwertigen Ionen und Wasser mittels Nanofiltration aus Milch- und/oder Molke-Ausgangsprodukten erhalten werden

Ein besonderes Problem im Zusammenhang mit der Herstellung von Frischkäse besteht darin, Grundmassen zu erzeugen, die geschmacklich neutral sind. Wird Magermilch mittels Ultrafiltration auf eine Quarkgrundmasse vorkonzentriert und anschließend gesäuert, weist das Produkt nämlich einen sehr bitteren Geschmack auf und ist sensorisch nicht akzeptabel. Diese sensorische Abweichung wird insbesondere durch die Anwesenheit von Bitterproteinen und Phosphaten induziert. Alkalimetallionen, insbesondere Natrium, neigen dazu, einen metallischen Geschmack hervorzurufen. Die Verfahren des Stands der Technik zur Aufkonzentrierung von ungesäuerter Magermilch zu Quark sind bisher nicht in der Lage, Phosphate und Alkalimetallionen quantitativ abzutrennen, so dass noch solche Mengen im Produkt verbleiben, dass eine geschmackliche Beeinträchtigung nicht verhindert werden kann.

Weiterhin fällt bei der konventionellen Herstellung von Quark als Koppelprodukt Sauermolke an, deren Abtrennung vom Käsebruch aufwendig ist und für die es nur begrenzte Verwendungsmöglichkeiten gibt.

Ein Weg zur Verbesserung der geschmacklichen Eigenschaften besteht in der Verwendung bestimmter Starterkulturen, die dazu beitragen, dass bittere Geschmackswahrnehmungen maskiert werden (vgl. EP 2839748**,** EP 2839749 A1**,** DMK), was jedoch an der Präsenz dieser Bitterstoffe nichts ändert - und natürlich auch nicht das Problem der Sauermolke als Koppelprodukt löst. Will man die Bitterstoffe tatsächlich abtrennen - auch vor dem Hintergrund natriumarmer Produkte - muss anders verfahren werden.

So wird z.B. in der EP 2796051 A1 (DMK) zur Verbesserung der geschmacklichen Qualität von Frischkäse oder Quark vorgeschlagen, Magermilch zunächst einer gekoppelten Ultra- und Filtration zu unterwerfen und das dabei anfallende Permeat einer Fällungsdemineralisierung zu unterwerfen, und das mineralstoffarme Filtrat mit dem proteinreichen Retentat aus der Ultrafiltration zu vereinigen, ehe diese Mischung dann denaturiert, fermentiert und standardisiert wird. Nachteilig ist hierbei jedoch, dass weder die Abtrennung von Bitterstoffen noch von einwertigen Kationen, speziell Natrium die einen metallischen Beigeschmack verursachen, vollständig erfolgt und das resultierende Produkt daher geschmacklich unzureichend ist. Zudem ist die Fällung der Calciumsalze technisch aufwendig und entsprechend teuer.

Die Aufgabe der vorliegenden Erfindung hat somit darin bestanden, eine geschmacklich verbesserte Quarkmasse mit vermindertem Anteil an Bitterstoffen, speziell Bitterproteinen sowie vermindertem Natriumgehalt (kleiner 50 ppm, vorzugsweise kleiner 10 ppm) und gleichzeitig verbesserten sensorischen und geschmacklichen Eigenschaften speziell im Hinblick auf die Lehre der oben genannten EP 2796051 A1 zur Verfügung zu stellen, die ohne Zusatz von Additiven direkt abfüll- und verzehrfertig ist. Gleichzeitig sollte das entsprechende Herstellverfahren ohne den Anfall von Sauermolke als Abfallprodukt auskommen und stattdessen Koppelprodukte mit höherer Wertschöpfung bereitstellen.

### BESCHREIBUNG DER ERFINDUNG

Ein erster Gegenstand der Erfindung betrifft eine Quarkgrundmasse mit einem Natriumgehalt von weniger als 50 ppm und eine Trockenmasse von 15 bis 20 Gew.-% und einem Proteingehalt von 10 bis 15% die dadurch erhältlich ist oder erhalten wird, dass man
(a) Rohmilch einer Temperaturbehandlung unterwirft und den Rahm abtrennt,
(b) die so erhaltene Magermilch einer Mikrofiltration unterwirft und dabei ein erstes Retentat R1, das ein erstes Milchproteinkonzentrat darstellt, und ein erstes Permeat P1 herstellt,
(c) das Permeat P1 einer Ultrafiltration und/oder Umkehrosmose unterwirft und dabei ein zweites Retentat R2, das ein zweites Milchproteinkonzentrat darstellt, und ein zweites Permeat P2 herstellt,
(d) das Permeat P2 einer Elektrodialyse mit nachfolgender Kationenaustauscher-Behandlung und dabei ein an Salzen verarmtes Diluat D1 herstellt,
(e) das Diluat D1 mit dem Retentat R1 vereinigt,
(f) das so erhaltene Vereinigungsprodukt einer Temperaturbehandlung unterwirft, bis Denaturierung eintritt,
(g) das so erhaltene Denaturierungsprodukt durch Zusatz von Starterkulturen und Lab fermentiert und
(h) das so erhaltene Fermentationsprodukt auf einen definierten Trockenmassen- und Proteingehalt einstellt bzw. standardisiert.

Ebenfalls Gegenstand der vorliegenden Erfindung ist ein entsprechendes Verfahren zur Herstellung einer entsprechenden Quarkgrundmasse, mit einem Natriumgehalt von weniger als 50 ppm umfassend die folgenden Schritte:
(a) Erzeugen einer Magermilch durch Temperaturbehandlung einer Rohmilch und Abtrennung des Rahms;
(b) Unterwerfen der so erzeugten Magermilch einer Mikrofiltration unter Erhalt eines ersten Retentats R1, das ein erstes Milchproteinkonzentrat darstellt, und eines ersten Permeats P1,
(c) Unterwerfen des so erzeugten Permeats P1 einer Ultrafiltration und/oder Umkehrosmose unter Erhalt eines zweiten Retentats R2, das ein zweites Milchproteinkonzentrat darstellt, und eines zweiten Permeats P2,
(d) Unterwerfen des so erzeugten Permeats P2 einer mit nachfolgender Kationenaustauscher-Behandlung. unter Erhalt eines an Salzen verarmten Diluats D1,
(e) Vereinigen des Diluats D1 mit dem Retentat R1,
(f) Temperaturbehandlung des so erzeugten Vereinigungsproduktes, bis Denaturierung eintritt,
(g) Fermentieren des so erzeugten Denaturierungsproduktes durch Zugabe von Starterkulturen und Lab sowie
(h) Einstellen bzw. Standardisieren des so erzeugten Fermentationsproduktes auf einen definierten Trockenmassen- und Proteingehalt.

Überraschenderweise wurde gefunden, dass die Aufgabe voll umfänglich gelöst wird, wenn Magermilch einer Kombination aus Mikrofiltration, Ultrafiltration (bzw. Umkehrosmose) und Elektrodialyse unterworfen wird, ehe die so erhaltenen Fraktionen anschließend wie oben beschrieben wieder vermischt und weiterverarbeitet werden. Von besonderem Vorteil ist, dass dabei als wertvolles Koppelprodukt das zweite Molkenproteinkonzentrat als Retentat der Ultrafiltration anfällt, welches praktisch alle Bitterproteine enthält und getrennt weiterverarbeitet werden kann (WPC = whey protein concentrate).

Im Gegensatz zur Kombination aus Ultrafiltration, Nanofiltration und Fällung erweist sich das erfindungsgemäße Verfahren nicht nur als technisch weniger aufwendig und schneller, in der Dialyse werden auch überraschenderweise nicht nur zweiwertige, sondern auch einwertige Ionen praktisch vollständig entfernt, was zu Produkten mit deutlich geringerem Natriumgehalt und gleichzeitig weiter verbesserter Geschmacksqualität führt. Typischerweise liegen die Natriumwerte im Bereich von 5 bis 50 ppm.

### MAGERMILCHHERSTELLUNG

Zur Herstellung der Magermilch erfolgt zunächst eine Abtrennung von Nicht-Milchbestandteilen sowie die Entrahmung des Fettanteils von etwa 4 Gew.-% aus der Rohmilch. Dies findet üblicherweise in einem speziellen Bauteil, vorzugsweise einem Separator statt. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können.¹ Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.
¹ (http://www.westfalia-separator.com/de/anwendungen/molkereitechnik/milch-molke.html).

Die Wärmebehandlung der Rohmilch erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Rohmilch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

**MIKROFILTRATION, ULTRAFILTRATION UND UMKEHROSMOSE**

Im zweiten und dritten Verfahrensschritt wird die Magermilch zunächst mit Hilfe einer Mikrofiltration in ein Milchproteinkonzentrat, das als Retentat anfällt und ein Milchpermeat ("Edelmolke") getrennt. Die Edelmolke wird dann einer Ultrafiltration unterworfen, wobei die bei der Mikrofiltration nicht abgetrennten Bitterproteine nun sämtlich im Retentat zurückgehalten werden, während das zweite Permeat weiterverarbeitet werden kann. Durch die Kombination von MF und UF werden also zwei verschiedene Retentate erhalten, in denen sich Proteine unterschiedlichen Molekulargewichtes finden: im ersten Retentat sind es die größeren geschmacksneutralen Proteine, die der Quarkgrundmasse anschließend wieder zugegeben werden, im zweiten Retentat die kleineren Bitterproteine, die separat weiterverarbeitet werden.

Die **Mikro- oder Diafiltration** gehört zu den Membrantrennverfahren, wobei die Filtration bei Porengrößen > 0,1 µm, speziell von etwa 0,1 bis 1 µm erfolgt. Unter dem Begriff **Ultrafiltration** wird eine Filtration durch Membranen mit einer Porengröße < 0,1 µm (1.000 bis 50.000 Dalton) verstanden.

In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind.

Die Mikrofiltration bzw. die Ultrafiltration erfolgen beide vorzugsweise bei Temperaturen im Bereich von etwa 10 bis etwa 55, vorzugsweise 10 bis 20 °C, wobei die Membranen im Fall der Mikrofiltration eine Porengröße von 0,1 bis 0,2 µm aufweist. Und im Fall der Ultrafiltration vorzugsweise einen Porendurchmesser im Bereich von etwa 1.000 bis etwa 50.000 und vorzugsweise etwa 5.000 bis etwa 25.000 Dalton besitzen. Vorzugsweise handelt es sich um sogenannte Spiralwickelmembranen oder Platte-Rahmen-Module aus Polysulfon oder Polyethylenmembranen.

Eine Alternative zur Ultrafiltration stellt die **Umkehrosmose** dar. Hierbei wird die Magermilch unter Einsatz einer halbdurchlässigen (semipermeablen) Membran entwässert und dadurch die Konzentration der wertvollen Milchproteine erhöht. Das Prinzip besteht darin, das System einem Druck auszusetzen, der höher als der Druck ist, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen. Milch hat einen osmotischen Druck von weniger als 2 bar, der angewendete Druck für die Umkehrosmose von Milch beträgt 3 bis 30 bar, je nach verwendeter Membran und Anlagenkonfiguration. Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die Milchproteine zurückgehalten werden. Im Gegensatz zu einem klassischen Membranfilter verfügen Osmosemembranen nicht über durchgehende Poren. Die Umkehrosmose wird vorzugsweise Umkehrosmose bei einer Temperatur im Bereich von 10 bis 55, vorzugsweise 10 bis 20 °C mit semipermeablen Membranen durchgeführt, die eine Trennschärfe von 0 bis 1.000 Dalton aufweisen.

### ELEKTRODIALYSE

Bei der Elektrodialyse handelt es sich um einen elektrochemisch getriebenen Membranprozess, in dem lonenaustauschermembranen in Kombination mit einer elektrischen Potentialdifferenz benutzt werden, um ionische Spezies von ungeladenen Lösungsmitteln oder Verunreinigungen abzutrennen. Dazu wird in einem Elektrodialyse-Separator der Raum zwischen zwei Elektroden durch einen Stapel aus einander abwechselnden Anionen- und Kationenaustauschermembranen getrennt. Jedes Paar Ionenaustauschermembranen bildet eine separate "Zelle". In technischen Systemen bestehen diese Stapel aus mehr als zweihundert Membranpaaren. Wird eine elektrische Gleichspannung an die Elektroden angelegt, so wandern die Anionen zur Anode. Die Anionen können einfach die positiv geladenen Anionenaustauschermembranen passieren, aber sie werden jeweils an der nächstgelegenen negativ geladenen Kationenaustauschermembran gestoppt. Weil dasselbe (natürlich mit umgekehrten Vorzeichen) auch mit den Kationen geschieht, besteht der Nettoeffekt der Elektrodialyse in einer Anreicherung der Salze in den Zellen mit ungerader Nummer (Anionentauschermembran/Kationenaustauschermembran), während die Zellen mit gerader Nummer (Kationenaustauschermembran/Anionentauschermembran) an Salz verarmen. Die Lösungen mit erhöhter Salzkonzentration werden zum Konzentrat vereint, während die als anfallenden salzarmen Lösungen das Diluat bilden. Es empfiehlt sich, dass man das Diluat abschließend mit einem Kationenaustauscher ("Polisher") behandelt und insbesondere mit der Dialyse eingeschleppte Natriumionen wieder abtrennt.

Mit Hilfe der Elektrodialyse werden Diluate erhalten, die gegenüber dem eingesetzten Permeat einen um bis zu 95 Gew.-% verminderten Natriumgehalt aufweisen.

### DENATURIERUNG

Im folgenden Schritt wird die proteinreiche Fraktion aus der Ultrafiltration, also das Retentat, mit dem Diluat aus der Elektrodialyse vereinigt und einer thermischen Behandlung unterworfen. Die nun erfolgende Denaturierung kann in an sich bekannter Weise erfolgen, nämlich über einen Zeitraum von etwa 5 bis etwa 10 min und vorzugsweise etwa 6 min und Temperaturen von etwa 85 bis etwa 90 °C und insbesondere etwa 88 °C.

### FERMENTATION UND STANDARDISIERUNG

Auch die Fermentation des denaturierten Vorproduktes kann nach den bekannten Verfahren des Stands der Technik erfolgen. Dazu werden geeignete Starterkulturen, vorzugsweise Milchsäurebakterien, und Lab zugesetzt. Als Starterkulturen eignen sich insbesondere probiotische Bakterien vom Typ *Bifido bakterium lactis B12* oder *Lactobazillus a-cidophilus* sowie mesophile Bakterien wie beispielsweise *Lactococcus lactis* oder *Leuconostoc cremoris.*

Besonders bevorzugt sind ferner die beiden folgenden Kulturen bestehend aus 5 bzw. 3 probiotischen Bakterien, nämlich:
Mischung 1
   (i-1) *Streptococcus thermophilus,*
   (i-2) *Leuconostoc species,*
   (i-3) *Lactococcus lactis subsp. lactis biovar diacetylactis,*
   (i-4) *Lactococcus lactis subsp. lactis* und
   (i-5) *Lactococcus lactis subsp. cremoris,* sowie
Mischung 2
   (ii-1) *Streptococcus thermophilus,*
   (ii-2) *Lactococcus lactis subsp. lactis* und
   (ii-3) *Lactococcus lactis subsp. cremoris*

Vorzugsweise enthalten die Starterkulturen
- etwa 10 bis etwa 90 Gew.-%, vorzugsweise etwa 25 bis etwa 75 Gew.-% und insbesondere etwa 40 bis etwa 60 Gew.-% der Mischung (i) und
- etwa 90 bis etwa 10 Gew.-%, vorzugsweise etwa 75 bis etwa 25 Gew.-% und insbesondere etwa 60 bis etwa 40 Gew.-% der Mischung (ii)
mit der Maßgabe, dass sich die Mengenangaben zu 100 Gew.-% ergänzen.

Besonders bevorzugt sind Starterkulturen, die
- etwa 40 bis etwa 60 Gew.-% der Mischung (i) und
- etwa 60 bis etwa 40 Gew.-% der Mischung (ii)
mit der Maßgabe enthalten, dass sich die Mengenangaben zu 100 Gew.-% ergänzen.

In einer weiteren bevorzugten Ausführungsform sind die fünf Mikroorganismen, die die Mischung (i) bilden sowie die drei Mikroorganismen, die die Mischung (ii) bilden, in jeweils etwa gleichen Mengen enthalten. "Etwa gleich" ist in diesem Zusammenhang so zu verstehen, dass in der Mischung (i) die fünf Mikroorganismen jeweils in Mengen von 20 ± 5 Gew.-% und in der Mischung (ii) die drei Mikroorganismen jeweils in Mengen von 33 ± 5 Gew.-% enthalten sind. Statt die beiden im Handel erhältlichen Zubereitungen (i) und (ii) gemeinsam einzusetzen, ist es natürlich grundsätzlich auch möglich, die fünf Mikroorganismen einzeln zu verwenden und dann so abzumischen, dass eine Starterkulturmischung erhalten wird, mit der die geschmacklich verbesserten Quarkprodukte erhalten werden. Solche Starterkulturen enthalten dann vorzugsweise
- etwa 20 bis etwa 30 Gew.-% *Streptococcus thermophilus,*
- etwa 5 bis etwa 15 Gew.-% *Leuconostoc species,*
- etwa 5 bis etwa 10 Gew.-% *Lactococcus lactis subsp. lactis biovar diacetylactis,*
- etwa 20 bis etwa 30 Gew.-% *Lactococcus lactis subsp. lactis,*
- etwa 20 bis etwa 30 Gew.-% *Lactococcus lactis subsp. cremoris,* und mit der Maßgabe, dass sich die Mengenangaben zu 100 Gew.-% ergänzen.

Besonders bevorzugt sind Starterkulturen enthaltend
- 25 Gew.-% *Streptococcus thermophilus,*
- 12 Gew.-% *Leuconostoc species,*
- 13 Gew.-% *Lactococcus lactis subsp. lactis biovar diacetylactis,*
- 25 Gew.-% *Lactococcus lactis subsp. lactis,*
- 25 Gew.-% *Lactococcus lactis subsp. cremoris*

Alle genannten Mikroorganismen sind im Handel frei verfügbar.

Die Temperatur, bei der die Fermentation erfolgt, richtet sich nach dem Temperaturbereich, der für die jeweilig verwendeten Mikroorganismen optimal ist; typisch liegt die Temperatur im Bereich von etwa 18 bis etwa 35 °C und vorzugsweise bei etwa 30 °C.

Die nach der Fermentation erhaltene Quarkgrundmasse wird anschließend beispielsweise durch Zugabe von Sahne (etwa die Fraktion, di beider Herstellung der Magermilch angefallen ist) auf den gewünschten Gehalt an Trockenmasse und Proteinen eingestellt. Vorzugsweise liegt der Trockenmassengehalt bei etwa 15 bis etwa 20 Gew.-% und insbesondere bei etwa 18 Gew.-%. Der Proteingehalt kann etwa 10 bis etwa 15 Gew.-% und vorzugsweise etwa 12 Gew.-% betragen.

### GEWERBLICHE ANWENDBARKEIT

Ein weiterer Gegenstand der vorliegenden Erfindung betrifft die Verwendung der erfindungsgemäßen Quarkgrundmassen in Nahrungsmittelprodukten. Darunter ist zu verstehen, dass die Grundmassen als solche Bestandteil des Nahrungsmittels darstellen, beispielsweise einer Frischkäsezubereitung oder einer Quarkspeise oder im Laufe der Herstellung des Nahrungsmittels als Zutat verwendet werden, beispielsweise bei der Herstellung von Quarkkuchen.

### VERGLEICHSBEISPIEL V1

4.000 kg Magermilch wurden 6 min bei 88 °C behandelt und die enthaltenen Proteine denaturiert. Die Masse wurde mit Milchsäurebakterien gemäß Mischung (i) und Lab versetzt und bei 30 °C etwa 18 h gereift und anschließend aufgerührt. Anschließend wurde das Fermentationsprodukt in eine Zentrifuge gegeben und ca. 3,2 kg Sauermolke als flüssiger Bestandteil abgetrennt. Die zurückgebliebene Quarkmasse (ca. 800 g) wurde durch Zugabe von Sahne auf einen Fettgehalt von 40 Gew.-% in der Trockenmasse und einen Proteingehalt von 12 Gew.-% eingestellt.

### VERGLEICHSBEISPIEL V2 (analog zu EP 2796051 A1)

4.000 kg Magermilch wurden bei 20 °C einer Ultrafiltration mit einer Spiralwickelmembran (Trennschärfe 25.000 Dalton) unterworfen. Das proteinreiche Retentat wurde abgetrennt und das Permeat bei 20 °C einer Nanofiltration mit einer Spiralwickelmembran unterworfen (Trennschärfe 500 Dalton). Mit dem Permeat wurden Natrium- und Kaliumsalze abgetrennt. Das Retentat wurde anschließend durch Zugabe einer wässrigen, mit NaOH auf pH = 6 eingestellten Calciumchlorid-Lösung behandelt und die Phosphate als Calciumphosphat gefällt. Das so erhaltene Permeat wurde mit dem proteinreichen Retentat aus dem ersten Schritt vereinigt, 6 min bei 88 °C behandelt und die enthaltenen Proteine denaturiert. Die Masse wurde mit Milchsäurebakterien gemäß Mischung (i) und Lab versetzt und bei 30 °C etwa 2 h gerührt. Anschließend wurde das Fermentationsprodukt in eine Zentrifuge gegeben und die Sauermolke als flüssiger Bestandteil abgetrennt. Die zurückgebliebene Quarkmasse wurde durch Zugabe von Sahne auf einen Fettgehalt von 40 Gew.-% in der Trockenmasse und einen Proteingehalt von 12 Gew.-% eingestellt.

### BEISPIEL 1

4.000 kg Magermilch wurden bei 20 °C einer Mikrofiltration mit einer Keramikmembran unterworfen. Das erste proteinreiche Retentat wurde abgetrennt und das Permeat bei 20 °C einer Ultrafiltration mit einer Spiralwickelmembran (Trennschärfe 25.000 Dalton) unterworfen. Das zweite (bitter-)proteinreiche Retentat wurde abgetrennt und separat weiterverarbeitet. Das Permeat wurde bei 20 °C einer Elektrodialyse mit nachfolgender Kationaustauscherbehandlung unterworfen. Das so erhaltene Diluat wurde mit dem proteinreichen Retentat aus dem ersten Schritt vereinigt, 6 min bei 88 °C behandelt und die enthaltenen Proteine denaturiert. Die Masse wurde mit Milchsäurebakterien gemäß Mischung (i) und Lab versetzt und bei 30 °C etwa 2 h gerührt. Anschließend wurde das Fermentationsprodukt in eine Zentrifuge gegeben und die Sauermolke als flüssiger Bestandteil abgetrennt. Die zurückgebliebene Quarkmasse wurde durch Zugabe von Sahne auf einen Fettgehalt von 40 Gew.-% in der Trockenmasse und einen Proteingehalt von 12 Gew.-% eingestellt.

### VERKOSTUNG

Die Quarkgrundmassen wurden 24 Stunden im Kühlschrank bei 10 °C gelagert, anschließend 5 Minuten an die Umgebungstemperatur angepasst und dann von 5 Prüfern geschmacklich und sensorisch beurteilt, wobei die Skala von (1) = "schwach vorhanden" bis (5) = "stark ausgeprägt" reichte. Zudem wurde der Natriumgehalt der Produkte bestimmt. Die Ergebnisse sind in **Tabelle 1** zusammengefasst. Angegeben sind die Mittelwerte der Verkostung. Beispiel 1 ist erfindungsgemäß, die Beispiele V1 und V2 dienen zum Vergleich.

**Tabelle 1**

| Verkostungsergebnisse | | | |
|---|---|---|---|
| | **V1** | **V2** | **1** |
| ***Geschmackliche Beurteilung*** | | | |
| - bitter | 4,0 | 2,5 | 1,0 |
| - sandig | 4,0 | 2,5 | 1,0 |
| - frisch | 2,0 | 4,0 | 4,0 |

| ***Sensorische Beurteilung*** | | | |
|---|---|---|---|
| - cremig | 2,5 | 4,0 | 4,0 |
| - weich | 2,5 | 4,0 | 4,0 |
| ***Na-Gehalt [ppm]*** | Nicht bestimmt | 145 | 42 |

Das erfindungsgemäße Produkt zeichnet sich gegenüber dem nächstliegenden Stand der Technik nicht nur dadurch aus, dass es einen um mehr als ¾ verminderten Natriumgehalt aufweist, in der Verkostung wird es auch als weniger bitter und weniger sandig sowie tendenziell auch als frischer und cremiger empfunden.

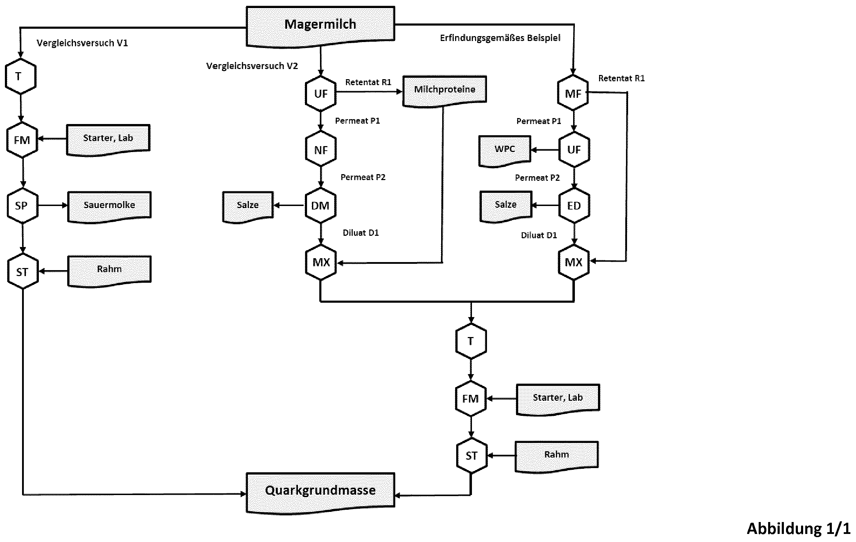

Die Verfahren gemäß den Beispielen 1 sowie V1 und V2 werden nachfolgend in der **Abbildung 1** noch einmal schematisch erläutert. Die Abkürzungen haben dabei folgende Bedeutung:
- T: = Temperaturbehandlung (Denaturierung)
- FM: = Fermentation
- SP: = Separierung
- ST: = Standardisierung
- UF: = Ultrafiltration
- NF: = Nanofiltration
- MF: = Mikrofiltration
- DM: = Demineralisierung
- MX: = Vermischung
- ED: = Elektrodialyse

## Patentansprüche

1. Quarkgrundmasse mit einem Natriumgehalt von weniger als 50 ppm und einem Trockenmassengehalt von 15 bis 20 Gew.-% und einem Proteingehalt von 10 bis 15 Gew.-%, dadurch erhältlich, dass man
(a) Rohmilch einer Temperaturbehandlung unterwirft und den Rahm abtrennt,
(b) die so erhaltene Magermilch einer Mikrofiltration unterwirft und dabei ein erstes Retentat R1, das ein erstes Milchproteinkonzentrat darstellt, und ein erstes Permeat P1 herstellt,
(c) das Permeat P1 einer Ultrafiltration und/oder Umkehrosmose unterwirft und dabei ein zweites Retentat R2, das ein zweites Milchproteinkonzentrat darstellt, und ein zweites Permeat P2 herstellt,
(d) das Permeat P2 einer Elektrodialyse mit nachfolgender Kationaustauscherbehandlung unterwirft und dabei ein Diluat D1 herstellt,
(e) das Diluat D1 mit dem Retentat R1 vereinigt,
(f) das so erhaltene Vereinigungsprodukt einer Temperaturbehandlung unterwirft, bis Denaturierung eintritt,
(g) das so erhaltene Denaturierungsprodukt durch Zusatz von Starterkulturen und Lab fermentiert und
(h) das so erhaltene Fermentationsprodukt auf einen definierten Trockenmassen- und Proteingehalt einstellt.

2. Verfahren zur Herstellung einer Quarkgrundmasse mit einem Natriumgehalt von weniger als 50 ppm, umfassend die folgenden Schritte:
(a) Erzeugen einer Magermilch durch Temperaturbehandlung einer Rohmilch und Abtrennung des Rahms;
(b) Unterwerfen der so erzeugten Magermilch einer Mikrofiltration unter Erhalt eines ersten Retentats R1, das ein erstes Milchproteinkonzentrat darstellt, und eines ersten Permeats P1,
(c) Unterwerfen des so erzeugten Permeats P1 einer Ultrafiltration und/oder Umkehrosmose unter Erhalt eines zweiten Retentats R2, das ein zweites Milchproteinkonzentrat darstellt, und eines zweiten Permeats P2,
(d) Unterwerfen des so erzeugten Permeats P2 einer Elektrodialyse mit nachfolgender Kationaustauscherbehandlung unter Erhalt eines Diluats D1,
(e) Vereinigen des Diluats D1 mit dem Retentat R1,
(f) Temperaturbehandlung des so erzeugten Vereinigungsproduktes, bis Denaturierung eintritt,
(g) Fermentieren des so erzeugten Denaturierungsproduktes durch Zugabe von Starterkulturen und Lab sowie
(h) Einstellen des so erzeugten Fermentationsproduktes auf einen definierten Trockenmassen- und Proteingehalt.

3. Verfahren nach Anspruch 2, **dadurch gekennzeichnet, dass** man die Mikrofiltration mit Membranen durchführt, die eine Trennschärfe von 0,1 bis 0,2 µm aufweisen.

4. Verfahren nach den Ansprüchen 2 und/oder 3, **dadurch gekennzeichnet, dass** man die Ultrafiltration mit Membranen durchführt, die eine Trennschärfe von 1.000 bis 50.000 Dalton aufweisen.

5. Verfahren nach mindestens einem der Ansprüche 2 bis 4, **dadurch gekennzeichnet, dass** man die Mikrofiltration und/oder die Ultrafiltration mit Spiralwickelmodulen und/oder Platte-Rahmen-Modulen durchführt.

6. Verfahren nach mindestens einem der Ansprüche 2 bis 5, **dadurch gekennzeichnet, dass** man die Umkehrosmose mit semipermeablen Membranen durchführt, die eine Trennschärfe von 0 bis 1.000 Dalton aufweisen

7. Verfahren nach mindestens einem der Ansprüche 2 bis 6, **dadurch gekennzeichnet, dass** man die Mikrofiltration und/oder die Ultrafiltration und/oder die Umkehrosmose bei einer Temperatur im Bereich von 10 bis 55 °C durchführt.

8. Verfahren nach mindestens einem der Ansprüche 2 bis 7, **dadurch gekennzeichnet, dass** man das Vereinigungsprodukt aus dem Diluat D1 und dem Retentat R1 über einen Zeitraum von 5 bis 10 min einer Temperaturbehandlung von 85 bis 90 °C unterwirft und dabei denaturiert.

9. Verfahren nach mindestens einem der Ansprüche 2 bis 8, **dadurch gekennzeichnet, dass** man das Denaturierungsprodukt bei 25 bis 35 °C mit Kulturen und Lab versetzt.

10. Verfahren nach mindestens einem der Ansprüche 2 bis 9, **dadurch gekennzeichnet, dass** man Kulturen einsetzt, bei denen es sich um eine der beiden folgenden Mischungen 1 oder 2 handelt:
Mischung 1
(i-1) *Streptococcus thermophilus,*
(i-2) *Leuconostoc species,*
(i-3) *Lactococcus lactis subsp. lactis biovar diacetylactis,*
(i-4) *Lactococcus lactis subsp. lactis* und
(i-5) *Lactococcus lactis subsp. cremoris,* sowie
Mischung 2
(ii-1) *Streptococcus thermophilus,*
(ii-2) *Lactococcus lactis subsp. lactis* und
(ii-3) *Lactococcus lactis subsp. cremoris*

11. Verfahren nach mindestens einem der Ansprüche 2 bis 10, **dadurch gekennzeichnet, dass** man das Fermentierungsprodukt auf eine Trockenmasse von 15 bis 20 Gew.-% und einen Proteingehalt von 10 bis 15 Gew.-% einstellt.

12. Verfahren nach mindestens einem der Ansprüche 2 bis 11, **dadurch gekennzeichnet, dass** man das Fermentierungsprodukt durch Zugabe eines Teils der Rahmfraktion aus Schritt (a) einstellt.

13. Verwendung der Quarkgrundmasse gemäß Anspruch 1 in Nahrungsmittelprodukten.

## Claims

1. A quark matrix having a sodium content of below 50 ppm and a dry matter content of 15 to 20% by weight and a protein content of 10 to 15% by weight, obtained by
(a) subjecting raw milk to heat treatment, separating the cream,
(b) subjecting the skimmed milk thus obtained to a microfiltration, obtaining a first retentate R1, which represents a first dairy protein concentrate, and a first permeate P1,
(c) subjecting the permeate P1 to an ultrafiltration and/or a reverse osmosis, obtaining a second retentate R2, which represents a second dairy protein concentrate, and a second permeate P2,
(d) subjecting the permeate P2 to an electrodialysis with a subsequent treatment using a cation exchanger, producing a diluate D1,
(e) combining the diluate D1 with the retentate R1,
(f) subjecting the combination product thus obtained to heat treatment until denaturation sets in,
g) fermenting the denaturation product thus obtained by the addition of starter cultures and rennet, and
(h) adjusting the fermentation product thus obtained to defined dry matter and protein contents.

2. A process for the production of a quark matrix having a sodium content of below 50 ppm, comprising the following steps:
(a) producing a skimmed milk by heat treatment of raw milk and separation of the cream;
(b) subjecting the skimmed milk thus obtained to a microfiltration, obtaining a first retentate R1, which represents a first dairy protein concentrate, and a first permeate P1,
(c) subjecting the permeate P1 thus obtained to an ultrafiltration and/or a reverse osmosis, obtaining a second retentate R2, which represents a second dairy protein concentrate, and a second permeate P2,
(d) subjecting the permeate P2 thus obtained to an electrodialysis with a subsequent treatment using a cation exchanger, obtaining a diluate D1,
(e) combining the diluate D1 with the retentate R1,
(f) heat treating the combination product thus obtained until denaturation sets in,
(g) fermenting the denaturation product thus obtained by adding starter cultures and rennet, and
(h) adjusting the fermentation product to defined dry matter and protein contents.

3. The process according to claim 2, wherein the microfiltration is performed using membranes having a cut-off of 0.1 to 0.2 µm.

4. Process according to claims 2 and/or 3, wherein the ultrafiltration is performed using membranes having a cut-off of 1.000 to 50.000 Dalton.

5. Process according to at least one of claims 2 to 4, wherein the microfiltration and/or the ultrafiltration is performed using spiral coil modules and/or plate and frame modules.

6. Process according to at least one of claims 2 to 5, wherein the reverse osmosis is performed using semi-permeable membranes having a cut-off of 0 to 1,000 Dalton.

7. Process according to at least one of claims 2 to 6, wherein the microfiltration and/or the ultrafiltration and/or the reverse osmosis is performed at a temperature within the range of 10 to 55 °C.

8. Process according to at least one of claims 2 to 7, wherein the combination product of the diluate D1 and the retentate R1 is subjected to a heat treatment step of 85 to 90 °C for a period of 5 to 10 min, denaturing the same in the process.

9. Process according to at least one of claims 2 to 8, wherein the culture and rennet are added to the denaturation product at 25 to 35 °C.

10. Process according to at least one of claims 2 to 9, wherein the culture used is at least one of the two following mixtures 1 or 2:
Mixture 1
(i-1) *Streptococcus thermophilus,*
(i-2) *Leuconostoc species,*
(i-3) *Lactococcus lactis subsp. lactis biovar diacetylactis,*
(i-4) *Lactococcus lactis subsp. lactis* und
(i-5) *Lactococcus lactis subsp. cremoris,* and
Mixture 2
(ii-1) *Streptococcus thermophilus,*
(ii-2) *Lactococcus lactis subsp. lactis* und
(ii-3) *Lactococcus lactis subsp. Cremoris*

11. Process according to at least one of claims 2 to 10, wherein the fermentation product is adjusted to a dry matter content of 15 to 20% by weight and a protein content of 10 to 15% by weight.

12. Process according to at least one of claims 2 to 11, wherein the fermentation product is adjusted by adding a portion of the cream fraction from step (a).

13. Use of the quark matrix according to claim 1 in a food product.

## Revendications

1. Masse de base de fromage frais dotée d'une teneur en sodium inférieure à 50 ppm et d'une teneur en masse sèche de 15 à 20 % en poids et d'une teneur en protéines de 10 à 15 % en poids, pouvant être obtenue, en ce que
(a) on soumet le lait cru à un traitement thermique et on sépare la crème,
(b) on soumet le lait maigre ainsi obtenu à une microfiltration et par la même on prépare un premier rétentat R1, qui représente un premier concentré de protéines de lait, et un premier perméat P1,
(c) on soumet le perméat P1 à une ultrafiltration et/ou à une osmose inverse et par la même on prépare un deuxième rétentat R2, qui représente un deuxième concentré de protéines de lait, et un deuxième perméat P2,
(d) on soumet le perméat P2 à une électrodialyse suivie par un traitement par un échangeur de cations et par la même on prépare un diluat D1,
(e) on réunit le diluat D1 avec le rétentat R1,
(f) on soumet le produit de réunification ainsi obtenu à un traitement thermique, jusqu'à ce qu'une dénaturation apparaisse,
(g) on fermente le produit de dénaturation ainsi obtenu par ajout de cultures de départ et de présure et
(h) on ajuste le produit de fermentation ainsi obtenu à une teneur en masse sèche et en protéines définies.

2. Procédé pour la préparation d'une masse de base de fromage frais dotée d'une teneur en sodium inférieure à 50 ppm, comprenant les étapes suivantes :
(a) production d'un lait maigre par traitement thermique d'un lait cru et séparation de la crème ;
(b) soumission du lait maigre ainsi produit à une microfiltration avec obtention d'un premier rétentat R1, qui représente un premier concentré de protéines de lait, et d'un premier perméat P1,
(c) soumission du perméat P1 ainsi produit à une ultrafiltration et/ou à une osmose inverse avec obtention d'un deuxième rétentat R2, qui représente un deuxième concentré de protéines de lait, et d'un deuxième perméat P2,
(d) soumission du perméat P2 ainsi produit à une électrodialyse suivie d'un traitement par un échangeur de cations avec obtention d'un diluat D1,
(e) réunification du diluat D1 avec le rétentat R1,
(f) traitement thermique du produit de réunification ainsi produit, jusqu'à ce qu'une dénaturation apparaisse,
(g) fermentation du produit de dénaturation ainsi produit par ajout de cultures de départ et de présure ainsi que
(h) ajustement du produit de fermentation ainsi produit à une teneur en masse sèche et en protéines définies.

3. Procédé selon la revendication 2, **caractérisé en ce qu'**on met en œuvre la microfiltration avec des membranes qui présentent un pouvoir séparateur de 0,1 à 0,2 µm.

4. Procédé selon les revendications 2 et/ou 3, **caractérisé en ce qu'**on met en œuvre l'ultrafiltration avec des membranes qui présentent un pouvoir séparateur de 1 000 à 50 000 daltons.

5. Procédé selon au moins l'une des revendications 2 à 4, **caractérisé en ce qu'**on met en œuvre la microfiltration et/ou l'ultrafiltration avec des modules enroulés en spirale et/ou avec des modules de type plaque-cadres.

6. Procédé selon au moins l'une des revendications 2 à 5, **caractérisé en ce qu'**on met en œuvre l'osmose inverse avec des membranes semiperméables qui présentent un pouvoir séparateur de 0 à 1 000 daltons.

7. Procédé selon au moins l'une des revendications 2 à 6, **caractérisé en ce qu'**on met en œuvre la microfiltration et/ou l'ultrafiltration et/ou l'osmose inverse à une température dans la plage de 10 à 55 °C.

8. Procédé selon au moins l'une des revendications 2 à 7, **caractérisé en ce qu'**on soumet le produit de réunification du diluat D1 et du rétentat R1 à un traitement thermique à une température de 85 à 90 °C pendant une période de temps de 5 à 10 minutes et par la même on le dénature.

9. Procédé selon au moins l'une des revendications 2 à 8, **caractérisé en ce qu'**on met à réagir le produit de dénaturation avec des cultures et de la présure à une température de 25 à 35 °C.

10. Procédé selon au moins l'une des revendications 2 à 9, **caractérisé en ce qu'**on utilise des cultures qui sont l'un des 2 mélanges suivants 1 ou 2 :
mélange 1
(i-1) *Streptococcus thermophilus,*
(i-2) *Leuconostoc species,*
(i-3) *Lactococcus lactis subsp. lactis biovar diacetylactis,*
(i-4) *Lactococcus lactis subsp. lactis* et
(i-5) *Lactococcus lactis subsp. cremoris,* ainsi que
mélange 2
(ii-1) *Streptococcus thermophilus,*
(ii-2) *Lactococcus lactis subsp. lactis* et
(ii-3) *Lactococcus lactis subsp. cremoris.*

11. Procédé selon au moins l'une des revendications 2 à 10, **caractérisé en ce qu'**on ajuste le produit de fermentation à une masse sèche de 15 à 20 % en poids et à une teneur en protéines de 10 à 15 % en poids.

12. Procédé selon au moins l'une des revendications 2 à 11, **caractérisé en ce qu'**on ajuste le produit de fermentation par ajout d'une partie de la fraction de crème de l'étape (a).

13. Utilisation de la masse de base de fromage frais selon la revendication 1 dans des produits alimentaires.
